# EUROPEAN PATENT SPECIFICATION

(11) **EP 4 521 297 B1**
(45) Date of publication and mention of the grant of the patent: **06.08.2025**
(21) Application number: 23306509.3
(22) Date of filing: 11.09.2023
(51) Int. Cl.: G06K 19/077, F21V 8/00

(54) **ILLUMINATION MODULE FOR A SMARTCARD**
BELEUCHTUNGSMODUL FÜR EINE CHIPKARTE
MODULE D'ÉCLAIRAGE POUR CARTE À PUCE

(43) Date of publication of application: 12.03.2025
(73) Proprietor: Linxens Holding, 78200 Mantes-la-Jolie (FR)
(72) Inventor: Phannam, Somchard, Tambon Ban Laean A (TH); Nieland, Carsten, 01099 Dresden (DE); Thienard, Olivier, 78200 Mantes la Jolie (FR); Doering, Sven, 01099 Dresden (DE); Klemm, Lars, 01099 Dresden (DE)
(74) Representative: Grünecker Patent- und Rechtsanwälte PartG mbB

(56) References cited:
- US-A1- 2020 150 333
- US-A1- 2020 160 135
- US-B1- 11 360 258

## Description

The present invention refers to an illumination module for a smart card and to a pre-laminated structure for a smart card and to a smartcard comprising same.

### STATE OF THE ART

It is known at the state of the art to provide smart cards with light sources, in order to indicate an operating condition of the smart card, or to illuminate a portion of the smart card.

Document CN206115469 describes for instance a dual interface smart card provided with a LED, which is placed in a core layer of the card. When a transaction is carried out, the dual-interface smart card is approached to a card reader. The card reader hence provides energy also to the LED light and generates a light flash, which indicates that the transaction is in progress. When the transaction is completed and the dual-interface smart card with the LED is removed from the card reader, no more power is supplied to the LED light, and accordingly the flashing effect of the LED light disappears.

On the other hand, document EP1919714 discloses a card provided with illumination means for illuminating a graphic element formed on a card layer. The card body is provided with a recess in correspondence of the card layer and the recess is filled with a light collecting film, which comprises a transparent plastic material in which fluorescent dyes are embedded. A LED source may be added to the card body to power up the fluorescent dyes.

Document US 2020/160135 A1 discloses a smart card comprising an LED module disposed in an opening of the metal layer of the card. The LED module comprises a light guide and LEDs for projecting light horizontally into the light guide so as to illuminate an area. A logo or graphics are formed on or in the front layer covering the illuminated area so that the logo or graphics are back-lit by the LED module.

Document US 2020/150333 A1 discloses a light guide illumination system including a light guiding sheet and a plurality of discrete light extraction features forming a two-dimensional light extraction pattern and configured to extract light from light guide.

In the configurations known at the state of the art, the light emitted by the light sources, such as the diode and/or the fluorescent dyes, passes through the plastic material of the card layers and is accordingly scattered in all directions before reaching the eyes of the user. Therefore, the brightness of the emitted light is not uniform and the graphic elements may appear blurred.

The illumination module according to the present invention aims at overcoming one or more of the disadvantages of the state of the art.

### SUMMARY

According to an aspect of the present invention, an illumination module for illuminating a portion of a smart card and according to claim 1 is provided.

The advantage of this configuration is that the illumination module enables re-emitting the light of the lighting elements along the direction perpendicular to the substrate layer and enables obtaining a uniform brightness distribution over the area of the light guiding material.

In the present disclosure, it is to be understood that an illumination module indicates a modular unit which is configured for illuminating a portion of a smart card and which comprises one or more lighting elements and a light guiding material body.

In the present disclosure, it is to be understood that a light guiding material refers to any transparent optical material designed to transport and distribute light from a first material having a first refractive index and a second material having a second refractive index. The light guiding material transports light from one location to another by exploiting the principles of total internal reflection at the boundary between the two materials.

According to the present invention, the light guiding material may be made of PC, PVC, PMMA, PET, glass, acrylic glass, polyurethane or its blends, LDPE, polysulfone, or transparent epoxy resins.

Preferably, the light guiding material does not comprise fluorescence molecules nor any other doping particles. The fact that the light guiding material of the invention does not comprise fluorescence molecules is advantageous because the light emitted by the lighting elements is entirely transmitted to the light guiding material and to the other layers, without any other energy conversion process. Moreover, in this way, the illumination module stops illuminating the other card layers immediately after switching off the lighting elements, without dwell times which would occur with fluorescence molecules.

The light guiding material has a refractive index higher than the refractive index of the surrounding layers, such as the other layers of the smart card. In this way, once the light has entered the light guiding material, it is reflected between the top and bottom surfaces due to total internal reflection and keeps travelling until it hits an out-coupling structure, such as the protrusions formed thereon. In fact, the protrusions of the pattern layer have a different refractive index compared to the other materials surrounding the light guiding material. Therefore, they modify the interface of the light guiding material with the other card layers so that, in the areas occupied by the protrusions, the rays of the emitted light, depending on their incident angle, are not totally internally reflected within the light guiding material, but they are partially extracted and emitted outside the light guiding material. In this sense, the protrusions enable extraction of the light emitted by the lighting elements.

According to a preferred configuration, the height of the light emitting area of the LED is designed in such a way as to correspond with the thickness of the layer of light guiding material. According to another preferred configuration, the height of the light emitting area of the LED is shorter than the thickness of the light guiding material to ensure that most of the light emitted from the LED surface is transmitted into the light guiding material. Preferably, the light guiding material may have a thickness comprised between 200 micrometers and 400 micrometers.

According to the invention, the pattern layer is designed so as to comprise a series of protrusions that are distributed so as to make the brightness of the emitted light uniform. The design and structure of the protrusions in the pattern layer are adapted to the positions of the lighting elements. For instance, the linear or superficial density of the protrusions on the pattern layer is adapted to the positions of the lighting elements. For instance, the dimensions (e.g. width and height) of the protrusions on the pattern layer is adapted to the positions of the lighting elements.

Preferably, the protrusions are dots.

Preferably, the protrusions are formed on the upper side of the light guiding material, that is the side of the light guiding material opposite to the substrate layer.

According to a preferred configuration, the lighting elements may be LEDs. The radiation pattern of top- or side-emitting LEDs is ideal for highest in-coupling efficiencies. According to other preferred configurations, the lighting elements may be Organic Light-Emitting diodes (OLEDs), printable Nano LED pastes, electroluminescent pastes, and/or silicon based LASERs.

According to an embodiment of the present invention, an illumination module is provided, wherein the protrusions are printed dots.

The printed dots may be white dots. The printed dots may be formed by means of any printing technique, such as screen printing, offset printing, ink jet printing or similar.

The advantages of forming the dots of the pattern layer by means of printing technology are that printing is a simple and efficient process, and that it enables adapting the printed pattern to any configuration and positions of the lighting elements with respect to the light guiding body. Moreover, printing enables realizing different configurations based on the type of light guiding material employed.

According to another embodiment of the present invention, an illumination module is provided, wherein the protrusions are bubbles formed from the light guiding material.

The bubbles may be formed in the light guiding material by means of laser processing. For instance, the light guiding material can be irradiated with a laser and this process may induce the formation of bubbles inside the material, which act as lenses to deviate the emitted light and extract it from the light guiding material.

The advantage of the laser processing technology is that it can be adapted to the specific configuration of the light guiding material and to the configuration and/or positions of the lighting elements. Moreover, the laser processing technology is very precise and it enables forming the bubbles only on the portion of the light guiding material corresponding to the area to be illuminated, thus avoiding emission of light from areas surrounding the portion to be illuminated.

According to another embodiment of the present invention, an illumination module is provided, wherein the protrusions are due to the formation of blind holes in the light guiding material as a consequence of laser processing.

For example, laser processing can be used to create blind holes in the light guiding material by ablation from its top surface.

According to another embodiment of the present invention, an illumination module is provided, wherein the linear density of the protrusions increases by increasing their distance from the one or more lighting elements.

The advantage of this configuration is that the position and design of the protrusion ensures a uniform distribution of the brightness of the light emitted by the lighting elements and refracted by the light guiding material. For instance, when a user observes the illumination module, they may see a more uniform brightness distribution of the emitted light.

According to another embodiment of the present invention, an illumination module is provided, wherein a surface of each of the one or more lighting elements is positioned in contact with the edges of the light guiding material, so as to have no gap between the lighting element and the light guiding material and to facilitate transmission of the emitted light.

The advantage of this configuration is that the light beam is transmitted directly from the lighting element into the light guiding material. A gap between the two elements would imply a change of refractive index between the two materials and would cause a partial energy loss.

According to an alternative embodiment of the present invention, an illumination module is provided, wherein a gap is formed between the lighting element and the light guiding material and the gap is filled with a gap filling material having a refractive index suitable for enabling transmission of light within the gap.

The advantage of filling the gap with a gap filling material is that the light emitted by the lighting elements is not reflected by the gap or by the sidewalls of the light guiding material and is hence transmitted in the light guiding material.

The refractive index of the gap filling material is selected in such a way as to optimize transmission of the light emitted by the lighting element into the gap material and then into the light guide material. Preferably, the gap filling material may be made of PC, PVC, PMMA, PET, glass, acrylic glass, polyurethane or its blends, LDPE, polysulfone, or transparent epoxy resins. Preferably, the gap filling material is made of the same material as the light guiding material.

Preferably, the light guiding material may have one or more recesses formed at the edges in order to accommodate the lighting elements. Preferably, the lighting elements are positioned at the same level of the layer of the light guiding material.

According to another embodiment of the present invention, an illumination module is provided, wherein the width of the pattern layer is shorter than the width of the light guiding material and/or the length of the pattern layer is shorter than the length of the light guiding material.

The advantage of this configuration is that the size of the pattern layer can be adapted to the size of the corresponding portion of the smartcard that needs to be lighted up on card level. In fact, only in this area to be illuminated, the light should be extracted out of the light guiding element, whereas, in the other areas, the emitted light is preferably reflected within the light guiding material.

According to another embodiment of the present invention, an illumination module is provided, wherein each protrusion has a circular shape with a diameter comprised within the range between 50 µm and 100 µm, preferably comprised within the range between 60 µm and 80 µm, even more preferably of 75 µm.

These dimensions ensure that the protrusions are small enough so as to ensure an even distribution and a uniform brightness of the light emitted by the light guiding body.

Preferably, the protrusions have a height comprised within the range between 3 µm and 50 µm.

According to the present invention, the illumination module further comprises a reflective layer configured to reflect the light emitted by the lighting elements outside the light guiding material and to re-direct it inside the light guiding material.

The advantage of this configuration is that it reduces energy losses.

According to a preferred configuration, the reflective layer is applied to the side of the substrate layer opposite to the light guiding material.

The advantage of this configuration is that it avoids back scattering of the light emitted by the lighting elements from the back of the illumination module, that is from the portion of the illumination module, opposite to the light guiding material. Preferably, the reflective layer may be bonded to the light guiding material by using an adhesive having a lower refractive index compared to the refractive index of the light guiding material. According to alternative embodiments, the reflective layer may be bonded directly to the light guiding material, without using any adhesive, by using for instance metal deposition (PVD) or direct lamination onto the light guiding material.

According to another embodiment of the present invention, an illumination module is provided wherein at least one reflective portion is applied in correspondence with the lighting element.

The advantage of this configuration is that the light which is emitted by the lighting elements directly towards the user and which does not pass through the lighting material is blocked. In this way, when the user looks at the illumination module, they do not see bright spots in correspondence with the lighting elements, but they see a uniform brightness of emitted light in correspondence with the illuminated portion of the substrate layer.

According to an embodiment of the present invention, an illumination module is provided wherein the reflective layer and/or the reflective portions comprise a metal layer or a metalized layer.

The advantage of this configuration is that the metal layer or the metalized layer enable forming a reflective layer in a simple and efficient way. For instance, the metal layer may be formed of aluminum, magnesium, copper, silver, or gold, or they may be formed of other reflective materials.

According to another embodiment of the present invention, an illumination module is provided, wherein the substrate layer is a Printed Circuit Board (PCB).

The advantage of this configuration is that the substrate layer can accommodate the optical and electronic components, such as diodes and/or capacitors, of the illumination module. Moreover, the illumination module can be manufactured and tested independently from the manufacturing process of the pre-laminated structure or of the smart card. In fact, the positions of the protrusions of the pattern layer with respect to the other electronic components can be controlled in a very precise way at an early stage of manufacturing of the final smart card. This also ensures a quality inspection about the brightness distribution before all elements are assembled into the pre-laminated structure and into the smart card.

According to preferred configurations, the PCB can comprise a metal layer underneath the light guiding element. This metal layer can act as a reflection layer or as an absorption layer.

According to an alternative embodiment of the present invention, an illumination module is provided, which comprises a PCB having a cutout portion, wherein the light guiding body is placed within the cutout portion.

The advantage of this configuration is that the illumination module can have a reduced thickness because the light guide body is inserted into the cutout portion of the PCB, not on top of the PCB.

According to another embodiment of the present invention, an illumination module is provided, wherein the illumination module comprises a plurality of lighting elements, for example a plurality of LEDs, and the plurality of lighting elements is formed on a single PCB.

The advantage of this configuration is that the production costs are optimized. Moreover, a single PCB comprising all the LEDs ensures a more precise positioning of same with respect to a configuration wherein one or more PCBs are used to accommodate corresponding LEDs, because it reduces the errors due to positioning of the LEDs on the PCBs and of placing the PCBs one next to the other.

According to a preferred configuration, the PCB comprising the LEDs may be formed so as to surround the light guiding material.

According to a preferred configuration, the light guiding material may have the shape of a rectangle and may be surrounded by the PCB, which may also have a rectangular shape.

According to other preferred configurations, the light guiding material may have any desired shape, such as a square, oval, triangle, or rounded shape. The PCB may be accordingly formed so as to surround or be placed below the light guiding material with the same shape as the light guiding material.

According to other preferred configurations, the PCB may have the shape of a regular polymer, such as a hexagonal or an octagonal shape, wherein at each or at every second side of the polymer of the PCB, an LED is positioned.

According to another embodiment of the present invention, an illumination module is provided wherein the light guiding body comprises an orientation element for ensuring correct positioning of the light guiding body with respect to the one or more lighting elements.

The advantage of this configuration is that ensures correct positioning of the light guiding body in the illumination module. In fact, it is clear that the light guiding material and also the pattern layer have a preferred orientation with respect to the lighting elements in the illumination module in order to ensure uniform brightness and refraction of light. Therefore, it is important that during the manufacturing processes, the operator places the light guiding body in the illumination module with the correct orientation.

According to another embodiment of the present invention, an illumination module is provided which further comprises an energy harvesting antenna for providing energy to the one or more lighting elements.

The advantage of this configuration is that the illumination module does not need an additional battery for providing energy to the lighting elements and it is therefore more economical.

According to another embodiment of the present invention, an illumination module is provided, wherein the one or more lighting elements are LEDs and the illumination module further comprises a rectifying system for rectifying the signal emitted by the energy harvesting antenna before transmitting it to the LED.

The advantage of this configuration is that the alternating signal, which is emitted by the energy harvesting antenna after exposure to an electromagnetic field generated by a reader, is converted into a rectified signal before being transmitted to the LEDs.

Preferably, the rectifying system of the present invention may be the electronic carrier 100 disclosed in the international patent application PCT/IB2020/000086 from the same applicant.

According to another aspect of the present invention, a pre-laminated structure for a smart card is provided, which comprises a pre-lam body comprising a cut out portion and an illumination module as the ones described above, wherein the illumination module is positioned in the cut out portion.

The advantage of this configuration is that a pre-laminated structure is provided wherein a portion of the substrate layer may be illuminated by the lighting elements and may be visible from the pre-lam body.

In the present disclosure, it is to be understood that the pre-laminated structure (also referred to as "pre-lam") for a smart card refers to an intermediate structure, which is formed in the manufacturing process of the smart card before lamination to the final covering layers of the smart card. The pre-laminated structure comprises a plurality of card layers stuck together so as to form a multi-layered structure and it further comprises the electronic components of the smart card, such as the antennas and the integrated circuit. The covering layers of the smart card comprising other graphic information are then added at a later stage of the manufacturing process of the smart card.

According to another embodiment of the present invention, a pre-laminated structure is provided, which further comprises a graphic layer comprising a graphic element, wherein the graphic layer is attached to the pre-lam body in correspondence with the illumination module, so that the illumination module illuminates the graphic element.

The advantage of this configuration is that the light emitted from the illumination module can be used to illuminate the portion of the graphic layer comprising the graphic element. The graphic element is preferably a logo of the card.

Examples of the techniques used for forming the graphic element are the following: off-set printing, screen printing, ink-jet printing, transfer printing, LASER processing (that is modifying laser sensitive molecules in the foil layer.

The pre-laminated structure of the present invention may advantageously contain a transparent or translucent window formed in an opaque layer positioned above the illumination module. The window may be advantageously formed in correspondence with the illumination module so as to expose the portion of the substrate layer which is illuminated by the lighting elements. For instance, the window may be formed in correspondence with the graphic element of the substrate layer.

According to another embodiment of the present invention, a pre-laminated structure is provided, wherein one or more light reflective portions are formed on the side walls of the cut out portion in correspondence with the one or more lighting elements.

The advantage of this configuration is that the light reflective portions formed at the lateral surfaces of the lighting elements prevent lateral back-scattering of the light emitted by the lighting elements and reduce energy loss. Hence, the light reflective portions contributes to forming a uniform and clear image of the portion of the graphic layer that is illuminated by the lighting elements.

According to another aspect of the present invention, a pre-laminated structure is provided, which further comprises a reflective layer configured to reflect the light emitted by the lighting elements outside the light guiding material and to re-direct it inside the light guiding material, or a blocking layer configured to absorb the light emitted by the lighting elements outside the light guiding material.

The advantage of this configuration is that it enables creating an image of the graphic element without blurred portions or portions with excessive brightness.

According to another aspect of the present invention, a smart card is provided, which comprises a pre-laminated structure as the ones described above; at least one opaque, covering layer applied to the pre-laminated structure; and at least one clear, covering layer applied to the pre-laminated structure.

It is to be understood that a clear layer may be transparent or translucent.

According to an embodiment of the present invention, the graphic layer comprising the graphic element to be illuminated may be formed on a layer of the smart card, not on a layer of the pre-laminated structure.

The smart card according to the present invention is advantageous because it enables illuminating a portion of the graphic layer formed in the pre-laminated structure or in the smart card by means of the illumination module, thanks to the lighting elements formed thereon. For instance, it may be useful to illuminate a portion of the graphic layer in order to see a graphic element, such as a logo of the smart card, formed thereon. For instance, it may be useful to illuminate a portion of the graphic layer in order to detect a working condition of the smart card, such as a condition wherein a transaction is carried out. In both examples, the smart card of the present invention enables re-emitting the light with a uniform brightness. For instance, the smart card according to the present invention ensures seeing a neat and clear image of the graphic element.

Preferably, the smart card comprises both an energy harvesting antenna for providing energy to the light emitting sources and a payment antenna for enabling transactions with an external reader.

Preferably, the smart card comprises both an energy harvesting antenna for providing energy to the light emitting sources and another transponder antenna connected to a RFID chip enabling contactless communication with an external reader, for example for access control applications.

Preferably, the RFID chip may be mounted on the same PCB as the one accommodating the electronic and optical components of the illumination module.

According to a preferred configuration, a user exposes the smart card to an external reader generating an electromagnetic field. A signal is accordingly generated in the energy-harvesting antenna and is used to power up the LEDs of the illumination module. The LEDs emit light, which is refracted by the light guiding material and the pattern layer and is then re-emitted in the direction of the user. Thanks to the presence of the pattern layer, the brightness of the re-emitted light is made uniform. The re-emitted light finally passes through the other layers of the smart card and reaches the user. A window is advantageously formed in the layers of the smart card in correspondence with the illuminated portion of the graphic layer, so as to make it visible also in the final smart card.

### FIGURES

In the following description, reference is made to the following figures:
Figure 1 schematically illustrates a top view of a smart card according to an embodiment of the present invention;
Figure 2A schematically illustrates a three dimensional view of an illumination module 100, wherein the illumination module 100 is an example not covered by the claims;
Figure 2B illustrates a detail of the pattern layer according to an embodiment of the present invention, which is obtained by means of computer simulations;
Figure 3A schematically illustrates a cross section of an illumination module, wherein the illumination module 100 is an example not covered by the claims;
Figure 3B schematically illustrates a three dimensional view of an illumination module according to an embodiment of the present invention;
Figure 4 schematically illustrates a cross section of an illumination module according to an alternative embodiment of the present invention;
Figure 5 schematically illustrates a three dimensional view of a pre-laminated structure for a smart card according to an alternative embodiment of the present invention;
Figure 6 schematically illustrates a top view of a pre-laminated structure for a smart card according to an alternative embodiment of the present invention;
Figure 7A schematically illustrates a cross section of a smart card according to an alternative embodiment of the present invention.
Figure 7B schematically illustrates a cross section of a smart card according to an alternative embodiment of the present invention.
Figure 8A schematically illustrates a cross section of a smart card according to an alternative embodiment of the present invention.
Figure 8B schematically illustrates a cross section of a smart card according to an alternative embodiment of the present invention.
Figure 9 schematically illustrates a cross section of a smart card according to an alternative embodiment of the present invention.
Figure 10 schematically illustrates a cross section of a smart card according to an alternative embodiment of the present invention.
Figure 11 schematically illustrates a cross section of a smart card according to an alternative embodiment of the present invention.

### DETAILED DESCRIPTION

The present description is presented for purposes of illustration but is not intended to be exhaustive or limited to the disclosed embodiments. The scope of protection of the present disclosure is defined in the appended set of claims. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand the disclosure for various embodiments with various modifications as are suited to the particular use contemplated. Finally, those fields considered known to the skilled person will not be described to avoid covering in a useless way the described invention.

In the present invention, it is to be understood that the terms "top", "bottom", "right", "left", "side", and variations thereof refer to the orientation of the figures but they do not intend to limit the invention.

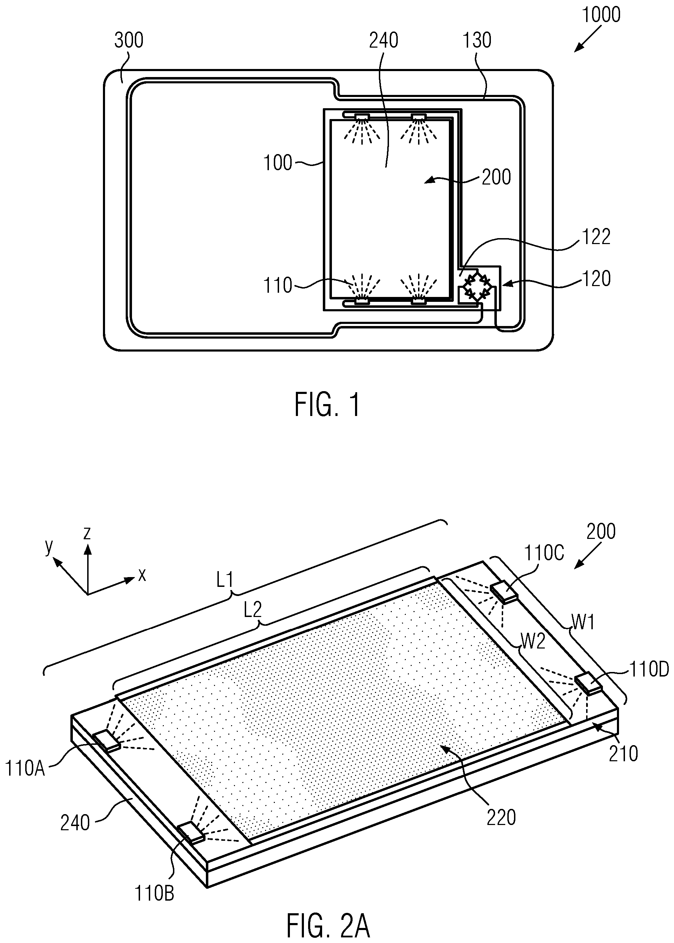

Figure 1 schematically illustrates a top view of a smart card 1000 according to an embodiment of the present invention. The smart card 1000 comprises a pre-lam body 310, in which a cutout portion is formed. In the cutout portion, an illumination module 100 is placed.

The illumination module 100 comprises a substrate layer 240 on which a light guiding body 200 is applied. The light guiding body 200 comprises a layer of light guiding material 210, on which a pattern layer 220 is formed. An adhesive layer (not shown) may be used to bond the light guiding body 200 to the substrate layer 240 and to the other layers of the card. Alternatively, the light guiding body 200 may be directly bond to the substrate layer 240 and to the other layers of the card. In the configuration shown in Figure 1, four lighting elements 110 are formed along the perimeter of the light guiding body 200. The lighting elements 110 may be for instance LEDs.

Even if in the configuration of Figure 1, four LEDs are illustrated, it appears that any number of LEDs may be formed on the illumination module 100, for instance one, two, three, or more.

The light emitted by the lighting elements 110 is parallel to the substrate layer 240 and travels through the light guiding material 210. The lighting elements 110 are advantageously positioned at the same level as the light guiding material 210. For example, the light guiding body 200 may have one or more recesses at the edges to accommodate corresponding lighting elements 110.

The light guiding material 210 may be made of PC, PVC, PMMA, PET, glass, acrylic glass, polyurethane or its blends, LDPE, polysulfone, or transparent epoxy resin.

The light guiding body 200 is configured in such a way as to refract the light emitted by the lighting elements 110 and to deviate it along a direction perpendicular to the substrate layer 240. The light guiding material 210 has a higher refractive index compared to the surrounding materials, such as the adhesive, and/or the substrate layer 240, and/or the other layers of the smart card 1000.

Preferably, the light emitted by the lighting elements 110 is deviated along the direction perpendicular to the substrate layer 240 which is directed towards the eyes of the user of the smart card 1000.

As can be seen in Figure 1, the illumination module 100 further comprises a harvesting antenna 130 which is used to provide energy to the lighting elements 110 when the smart card 1000 is exposed to an electromagnetic field. Moreover, the illumination module 100 of Figure 1 comprises a rectifying system 120, which is used to rectify the alternating signal emitted by the harvesting antenna 130 before transmitting it to the lighting elements 110.

The position and configuration of the energy-harvesting antenna 130 of the present invention may be similar to the position and configuration of the energy-harvesting antennas 104, disclosed in the international patent application PCT/IB2023/000026.

According to a preferred configuration, the lighting elements 110 may be LEDs and the rectifying system 120 may be used to rectify the alternating signal emitted by the harvesting antenna 130 before transmitting it to the LEDs. For example, the rectifying system 120 may be a four-diode bridge. Alternatively, the rectifying system 120 may be the electronic carrier 100 disclosed in the international patent application PCT/IB2020/000086 from the same applicant.

In the configuration shown in Figure 1, the rectifying system 120, the lighting elements 110 and any other electronic components such as capacitors and/or diodes are formed on a single PCB 122, which is connected to the harvesting antenna 130. The PCB 122 surrounds the light guiding body 200 and is placed on the substrate layer 240. The PCB 122 may have any shape suitable for exposing a portion of the light guiding body 200, so as to emit light in a direction perpendicular to the substrate layer 240. In the configuration illustrated in Figure 1, the PCB 122 has a rectangular shape and surrounds the light guiding body 200, which also has a rectangular shape, so that a portion of the light guiding body 200 and of the substrate layer 240 are visible at the center of the PCB 122.

According to alternative configurations (not shown), the PCB 122 and the light guiding body 200 may have any other shape, such as a squared, an oval, a triangular, or a round shape, or even a polygonal shape, for instance the shape of a regular polygon.

According to a preferred configuration (not shown), the PCB 122 may have a symmetric multi-corner shape (e.g., hexagonal, octagonal, or the like), wherein at each or at every second side a LED 110 is positioned

In order to improve the visibility of the graphic element of the smart card, a pattern layer 220 is applied on the light guiding material 210. The pattern layer 220 comprises a series of protrusions 222 distributed so as to make uniform the brightness of the light that is emitted by the lighting elements 110 and deviated by the light guiding body 200.

According to a preferred embodiment of the invention, the protrusions 222 may be printed dots. For instance, the printed dots may be printed by means of any suitable technique such as screen printing, offset printing, inkjet printing or similar. The printed dots may be made of a different material with respect to the material of the light guiding element 210

According to another preferred embodiment of the present invention, the series of protrusion may comprise a series of bubbles formed from the light guiding material 210 by illuminating the light guiding material 210 with a suitable laser. During the laser treatment, bubbles are created in the light guiding material 210 due to increased temperature. Accordingly, the bubbles are made of the same material as the light guiding element 210. The bubbles act as lenses on the emitted light and make the brightness more uniform and facilitate seeing the graphic element 241 on the substrate layer 240.

Figure 2A schematically illustrates a three dimensional view of the light guiding body 200 according to an embodiment of the present invention. In Figure 2A, it can be seen that the area of the pattern layer 220 is smaller than the area of the light guiding material 210. In particular, in the configuration of Figure 2A, the length L2 of the pattern layer 220 is shorter than the length L1 of the light guiding material 210 and the width W2 of the pattern layer 220 is equal to the width W1 of the light guiding material 210.

According to alternative configurations (not shown), the width W2 of the pattern layer 220 may be shorter than the width W1 of the light guiding material 210 and the length L2 of the pattern layer 220 may be equal to the length L1 of the light guiding material 210. According to other configurations (not shown), both the width W2 and the length L2 of the pattern layer 220 may be shorter than the width W1 and the length L1 of the light guiding material 210.

In the configuration of Figure 2A, it is possible to see that the light emitted by the lighting elements 110 passes through the light guiding material 210 in a direction parallel to the substrate layer 240, i.e. parallel to the plane XY with reference to the Cartesian reference system of Figure 2A. The light is then deviated and refracted along the direction perpendicular to the substrate layer 240, i.e. along the Z direction with reference to the Cartesian reference system of Figure 2A. Preferably, the Z direction is directed towards the eyes of the user who is holding the smart card 1000.

The pattern design of the pattern layer 220 is made in such a way as to equally distribute the brightness of the emitted light over the main part of the area of the light guiding material 210. This is achieved by variating the density of the protrusions in the pattern layer 220. As it can be seen in Figure 2A, the linear density of the protrusions 220 increases by increasing their distance from the lighting elements 110.

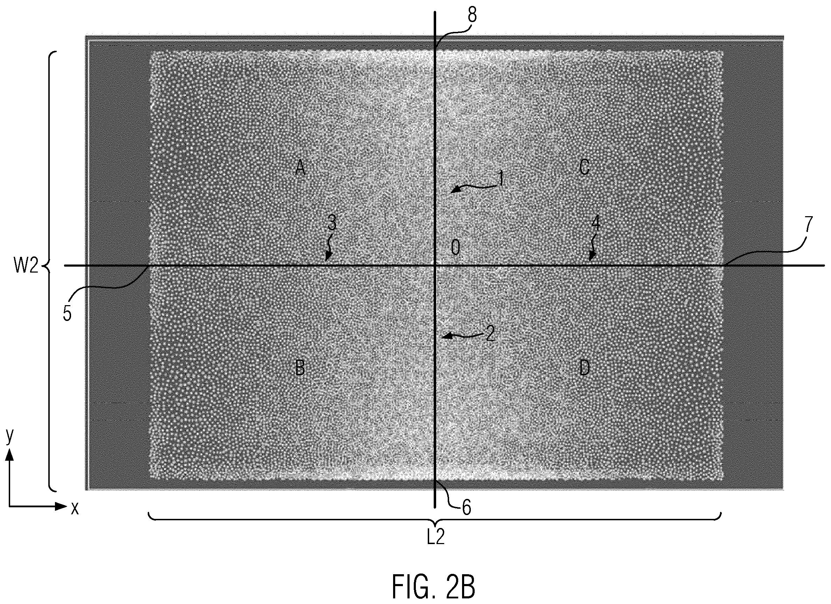

A detail of the distribution of the protrusions on the pattern layer 220 is shown in Figure 2B, which has been obtained by means of computer simulations with the simulation software LightTools.

The pattern layer 220 of Figure 2B can be ideally divided into four symmetric regions A, B, C and D. The region A is placed in correspondence of the lighting source 110A. The region B is placed in correspondence of the lighting source 110B. The region C is placed in correspondence of the lighting source 110C. The region D is placed in correspondence of the lighting source 110D. In each region A, B, C or D the linear density of protrusions 222 increases by increasing the distance from the corresponding lighting element 110. In this way, the linear density of protrusions is lower in close proximity with the lighting element 110 and is higher at the interface between adjacent regions, such as at the center O of the pattern layer 220 and in correspondence of delimiting lines 1, 2, 3 and 4 illustrated in Figure 2B. Moreover, the linear density of protrusions increases also in correspondence of the middle points 5 and 7 of the sides W2 and of the middle points 6 and 8 of the sides L2 shown in Figure 2B.

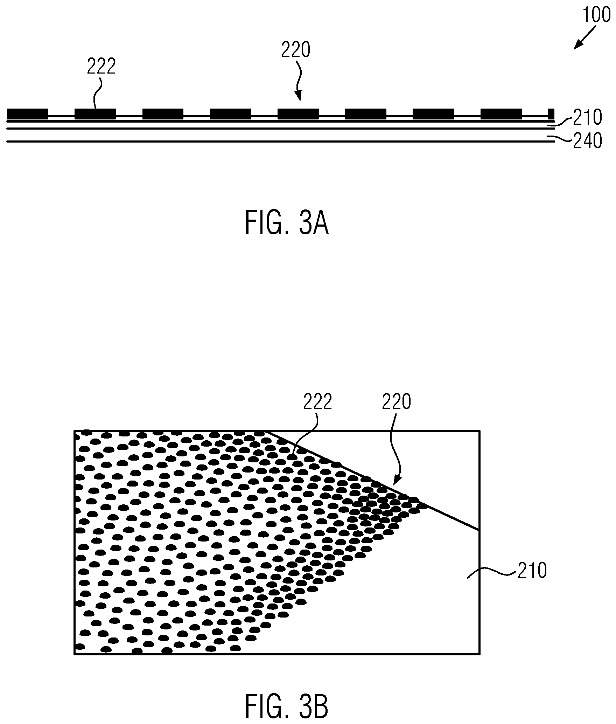

Figure 3A schematically illustrates a cross sectional view of the illumination module 100 according to an embodiment of the present invention. In the configuration of Figure 3A, it is possible to see that the light guiding material 210 is applied to the substrate layer 240 and that the protrusions or dots 222 of the pattern layer of 220 are formed thereon. With reference to the orientation of Figure 3A, the protrusions 222 are made on the upper side of the light guiding material 210. In the schematic configuration of Figure 3A, the protrusions 222 are illustrated as being equally spaced between each other. However, their reciprocal distance depends on the distance from the lighting sources 110, as explained above.

Figure 3B schematically illustrates a three dimensional view of the illumination module 100, wherein the protrusions 222 or dots of the pattern layer 220 are clearly visible. Preferably, the protrusion may be wide printed dots having a circular shape with a diameter comprised in the range between 50 µm and 100 µm, preferably between 60 µm and 80 µm, even more preferably of 75 µm.

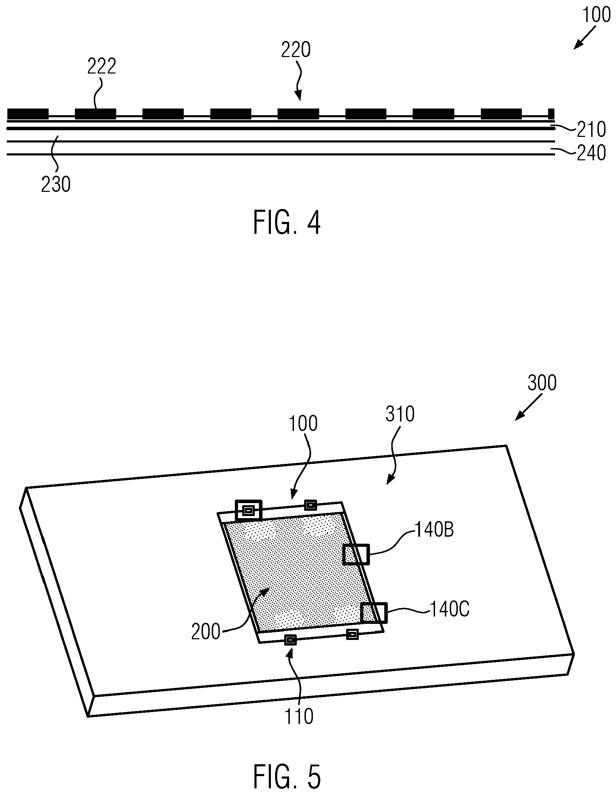

Figure 4 schematically illustrates a cross sectional view of an illumination model 100 according to a preferred embodiment of the present invention. In Figure 4, it is possible to see that a reflective layer 230 is placed between the substrate layer 240 and the light guiding material 210. The reflective layer 230 may be a foil of a metal material or of a metalized material. The metal may be aluminum, magnesium, or copper. The reflective layer 230 can be used to block part of the light emitted by the lighting elements 110 and to prevent back-scattering. In other words, the reflective layer 230 may be used to prevent that part of the emitted light is scattered from the side of the smart card 1000 which is not directed towards the user (i.e. the side opposite to the pattern layer 220). In this way, the light emitted by the light guiding body 200 has even a more uniform brightness. In fact, the light emitted by the backside of the light guiding body 200 would create a blurred image of the graphic element.

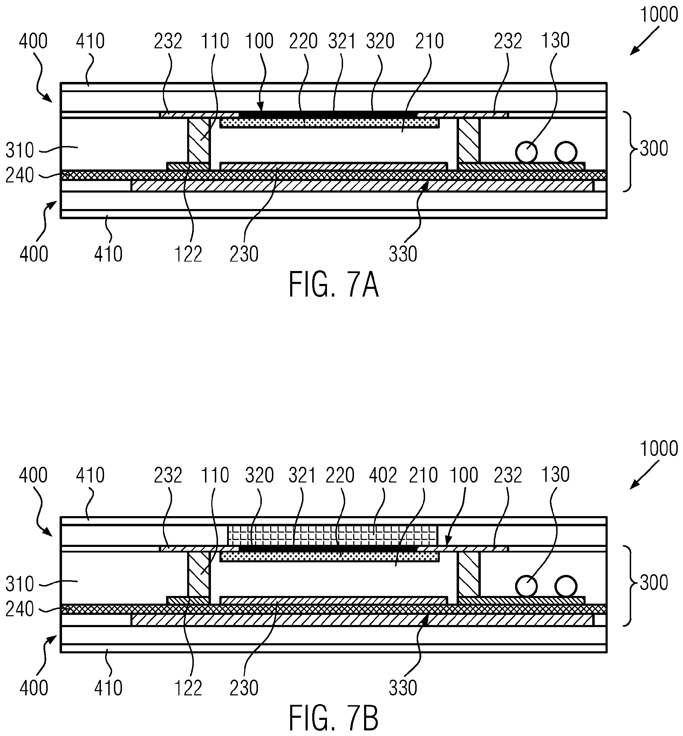

The illumination module 100 according to the invention may be used to illuminate a portion of a graphic layer of a smart card 1000, for instance to enable seeing a logo of a smart card or to indicate a working condition of the smart card. As it can be visible in Figures 7-10 below, the graphic layer may be formed in the pre-laminated structure, or in the smart card.

During manufacturing of the smart card, the illumination module 100 is inserted into a predefined cutout portion of the pre-laminated structure 300 of the smart card. The final covering layers of the smart card 1000 are then added to the pre-laminated structure 300 to cover it.

Figure 5 schematically illustrates a three dimensional view of a portion of a pre-laminated structure 300 for a smart card 1000 according to an embodiment of the present invention. In Figure 5, it can be clearly visible that the illumination module 100 is inserted into a cutout portion of the pre-lam body 310. Along the side walls of the cutout portion, one or more reflective portions 140A, 140B and 140C may be formed. Preferably, the reflective portions 140A, 140B and 140C are placed in correspondence with the lighting elements 110 in order to prevent light from being scattered by the sides of the cutout portion and to improve the quality of the image of the graphic element of the smart card. Thanks to the reflection portions 140A, 140B, 140C and 140D, the energy loss of the emitted light is reduced and more emitted light finally reaches and illuminates the graphic element. Therefore, the reflective portions help to increase the brightness of the light that is illuminating the area of the graphic element.

The reflective portions 140A, 140B and 140C may be formed of a thin metal or metalized layer, such as a thin layer comprising aluminum, magnesium, copper, silver, or gold, or they may be formed of other reflective materials.

In view of the above disclosure, it is clear that the illumination module 100 has a preferred orientation and that the light guiding body comprising the light guiding material 210 and the pattern layer 220 should be placed on the illumination module 100 is such a way as to have a preferred orientation with respect to the lighting elements 110. For example, the linear density of the protrusions 222 of the pattern layer 220 should be higher at increasing distance from the lighting elements 110. Moreover, the light guiding material 210 should be placed in such a way as to be able to refract light along a direction perpendicular to the substrate layer 240.

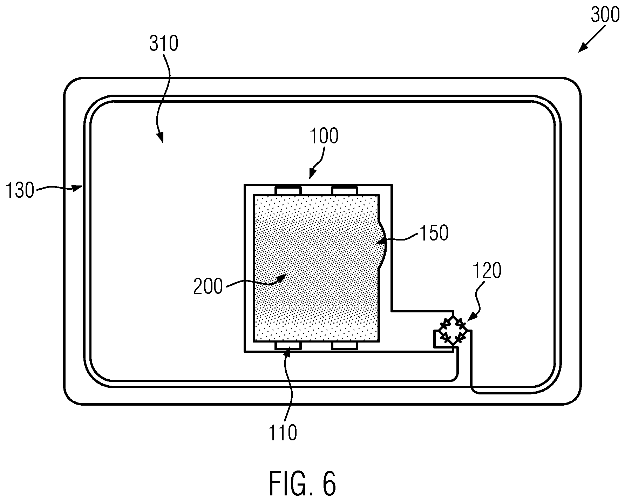

In order to ensure correct positioning of the light guiding body 200 with respect to the lighting elements 110, the light guiding body 200 may be provided with the orientation element 150. For instance, the orientation element 150 may be a protrusion or nose, which indicates a preferred orientation of the light guiding body 200 for its positioning in the illumination module 100. In this way, during manufacturing, the operator may position the light guiding body 200 so that the light guiding material 210 and the pattern layer 220 have a preferred orientation with respect to the lighting elements 110. The configuration of the illumination module 100 with the light guiding body 200 provided with an orientation element 150 is schematically illustrated in Figure 6.

As it is schematically shown in Figure 6, the cutout portion of the pre-laminated structure 300 is shaped so as to match the configuration of the orientation element 150.

Figure 7A schematically represents a cross sectional view of smart card 1000 according to an embodiment of the present invention.

In Figure 7A, it is possible to see that the illumination module 100 is placed in a cutout portion formed in the pre-lam body 310 of the pre-laminated structure 300 for the smart card 1000. The illumination module 100 comprises the lighting elements 110 (only two lighting elements are visible in the cross section of Figure 7A). The light guiding body 200 comprising the light guiding material 210 and the pattern layer 220 is positioned between the lighting elements 110. An antenna 130 is formed around the light guiding body 200 in order to provide energy to the lighting elements 110.

In the configuration shown in Figure 7A, the PCB 122 surrounds the light guiding body 200 and is placed on the substrate layer 240, as described with reference to Figure 1. The lighting elements 110 and the connection pads of the harvesting antenna 130 are formed on the single PCB 122.

In the configuration shown in Figure 7A, the pre-laminated structure 300 further comprises a graphic layer 320 which is attached to the top of the illumination module 100. The graphic layer 320 comprises a graphic element 321 which receives the light emitted by the illumination module. In this way, the graphic element 321 may be visible by the user. Preferably, the pattern layer 220 is formed only in correspondence of the area of the graphic layer 320 comprising the graphic element 321, in order to extract the light from the corresponding portion of the light guiding material 210 and to illuminate only the area of the graphic element 321. In this way, the image of the graphic element 321 is clear and bright.

In the configuration of Figure 7A, also a reflective layer 230 is formed on the backside of the illumination module 100 in order to prevent back scattering of the light emitted by the lighting elements 110, in the direction opposite to the one of the user (the bottom of Figure 7A). The reflective layer 230 may be directly or indirectly attached to the light guiding body 200. For instance, the reflective layer 230 may be indirectly attached to the light guiding body 200 by means of an adhesive layer (not shown).

Moreover, in the configuration of Figure 7A, reflective portions 232 are formed in correspondence with the lighting elements 110, in the direction opposite to the reflective layer 230. Furthermore, the pre-laminated structure 300 of Figure 7A comprises an additional reflective layer 330 for reflecting the light emitted by the lighting elements 110 outside the light guiding body 200 and redirected it into same. In this way, when the user observes the smart card 1000 from the top, they can see the graphic element 321 without seeing spots of excessive brightness in correspondence with the lighting elements 110. In fact, the direct light emitted by the lighting elements 110 in other directions is blocked by the reflective portions 232 and by the reflective layer 330. The reflective portions and layers may be made of any metal or metalized material.

An integrated circuit (not shown) may be further formed in the pre-lam body 310. The integrated circuit may be formed directly into the illumination module 100, or in another layer of the pre-laminated structure 300. The pre-lam body 310 comprising the illumination module 100 and the integrated circuit forms the pre-laminated structure 300 of the smart card 1000.

The pre-laminated structure 300 of the smart card 1000 is placed between covering layers. Preferably, top and bottom opaque covering layers 400 are attached to the pre-laminated structure 300. Preferably, top and bottom clear covering layers 410 are attached to the corresponding opaque covering layers 400 of the smart card 1000. Preferably, the opaque covering layers 400 comprise white PVC sheets. Preferably, the clear covering layers 410 comprise clear PVC sheets.

As schematically shown in Figure 7B, the smart card 1000 of the present invention may advantageously comprise a transparent or translucent window 402, which is formed in the white or opaque covering layer 400. The window 402 is advantageously aligned with the light guiding body 200, so that the light emitted by the illumination module 100 illuminates the graphic element 321 and reaches the user by passing through the transparent window 402.

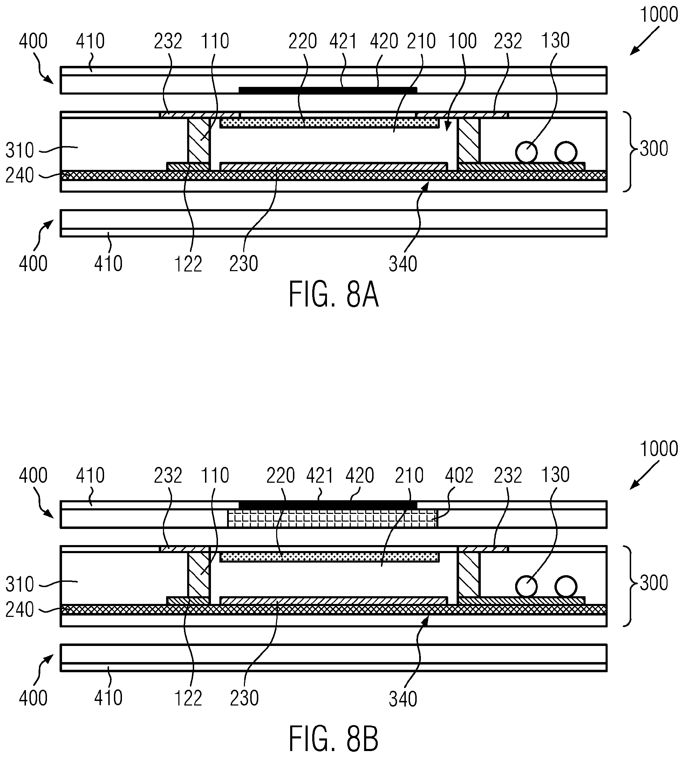

Figure 8A schematically represents a cross sectional view of smart card 1000 according to an alternative embodiment of the present invention.

The smart card 1000 of Figure 8A comprises the same elements as the smart card 1000 of Figure 7A, but it differs from it in that the pre-laminated structure 300 does not comprise any graphic layer.

The graphic element 421 of the smart card 1000 of Figure 8A is formed in the graphic layer 420 which is attached to the pre-laminated structure 300 at a late stage of manufacturing, during lamination of the final layers of the smart card. Preferably, the graphic element 421 is a printed element.

When the lighting elements 110 are activated, the graphic element 421 is visible by the user. Preferably, the pattern layer 220 is formed only in correspondence with the area of the graphic layer 420 comprising the graphic element 421, in order to extract the light from the corresponding portion of the light guiding material 210 and to illuminate only the area of the graphic element 421. In this way, the image of the graphic element 421 is clear and bright.

Moreover, the smart card 1000 of Figure 8A differs from the smart card of Figure 7A in that the reflective layer 330 is replaced by a blocking layer 340, which stops and absorbs the light emitted by the lighting elements 110 in the direction opposite to the user (i.e. the bottom of Figure 8A). In this way, backscattering of the emitted light is reduced and the image of the graphic element 421 is clearer.

As schematically shown in Figure 8B, the smart card 1000 of the present invention may advantageously comprise a transparent or translucent window 402, which is formed in the white or opaque covering layer 400. The window 402 is advantageously aligned with the light guiding body 200, so that the light emitted by the illumination module 100 illuminates the graphic element 421 and reaches the user by passing through the transparent window 402.

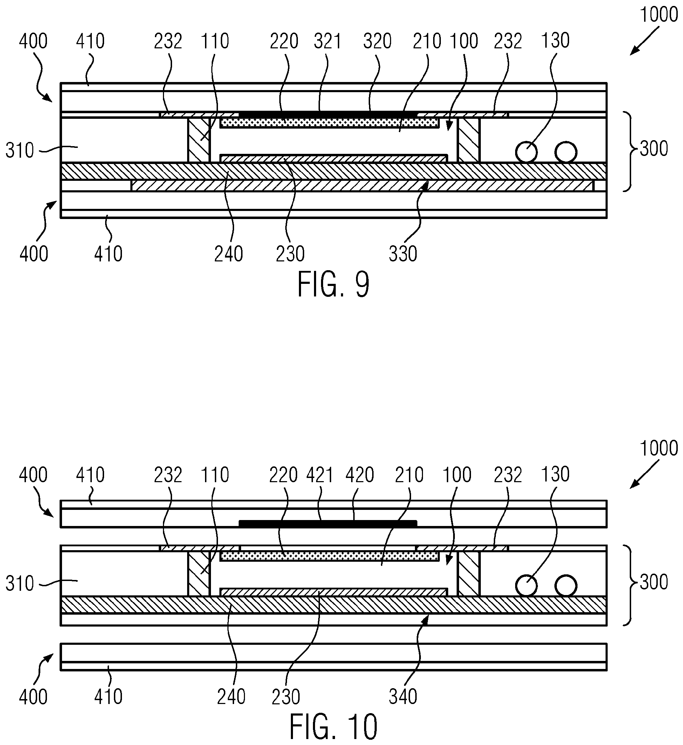

Figure 9 schematically represents a cross sectional view of smart card 1000 according to an alternative embodiment of the present invention.

The smart card 1000 of Figure 9 comprises the same elements as the smart card 1000 of Figure 7A, but it differs from it in the configuration of the PCB. In fact, in the smart card 1000 of Figure 9, the PCB forms the substrate layer 240 of the illumination module 100. In other words, the PCB 240 does not surround the illumination module 100, but it forms the substrate layer on which the optical components, such as the light guiding body 200, and the electrical components (such as antenna 130 and rectifying element 120 and other diodes and/or capacitors) are formed.

In the configuration of Figure 9, the reflective layer 330 is attached to the bottom of the PCB layer 240.

Figure 10 schematically represents a cross sectional view of smart card 1000 according to an alternative embodiment of the present invention.

The smart card 1000 of Figure 10 comprises the same elements as the smart card 1000 of Figure 8A, but it differs from it in the configuration of the PCB. In fact, in the smart card 1000 of Figure 10, the PCB forms the substrate layer 240 of the illumination module. In other words, the PCB 240 does not surround the illumination module 100, but it forms the substrate layer on which the optical components, such as the light guiding body 200, and the electrical components (such as antenna 130 and rectifying element 120 and other diodes and/or capacitors) are formed.

In the configuration of Figure 10, the reflective layer 330 is attached to the bottom of the PCB layer 240.

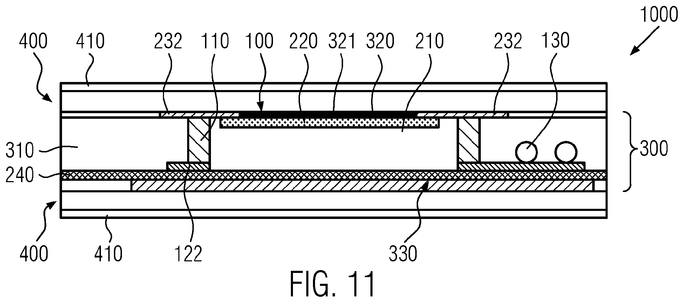

Figure 11 schematically represents a cross sectional view of smart card 1000. As illustrated in the smart card 1000 of Figure 11, the pre-laminated structure 300 comprises the reflective layer 330 for reflecting the light emitted by the lighting elements 110 in the direction opposite to the user (bottom of Figure 11) and reducing energy losses.

It is to be understood that Figures 7A, 7B, 8A, 8B, 9, 10 and 11 show possible configurations of the smart cards according to the present invention. However, they should not be considered as limiting the invention. In fact, all the possible combinations of the configurations of the reflective layers (e.g. directly or indirectly attached to the light guiding body, formed in the illumination module or in the pre-laminated structure), of the graphic layer (e.g. part of the pre-laminated structure or of the smart card), and of the PCB (e.g. surrounding the light guiding body or forming the substrate layer) are possible.

### LIST OF REFERENCES

1, 2, 3, 4: delimiting lines
5, 6, 7, 8: middle points
100: illumination module
110, 110A, 110B, 110C, 110D: lighting elements
120: rectifying element
122: PCB
130: harvesting antenna
140A, 140B, 140C: light reflective portions
150: orientation element
200: light guiding body
210: layer of light guiding material
220: pattern layer
230: reflective layer
232: reflective portion
240: substrate layer
300: pre-laminated structure
310: pre-lam body
320: graphic layer of pre-laminated structure
321, 421: graphic elements
330: reflective layer of pre-laminated structure
340: blocking layer of pre-laminated structure
400: opaque covering layer
402: window
410: clear covering layer
420: graphic layer of smart card
1000: card
W1: width of layer of light guiding material
L1: length of layer of light guiding material
W2: width of pattern layer
L2: length of pattern layer

## Claims

1. An illumination module (100) for illuminating a portion of a smart card, said illumination module (100) comprising:
- A substrate layer (240);
- One or more lighting elements (110) positioned on said substrate layer (240) and configured to emit light parallel to said substrate layer (240), for instance one or more LEDs; and
- A light guiding body (200) applied to said substrate layer (240) and comprising a light guiding material (210);
**characterized in that:**
said illumination module (100) further comprises a reflective layer (230) configured to reflect the light emitted by said lighting elements (110) outside said light guiding material (210) and to re-direct it inside said light guiding material (210); and
said light guiding body further comprises a pattern layer (220) applied to said light guiding material (210) and being configured to refract said light parallel to said substrate layer (240) and deviate it along a direction perpendicular to said substrate layer (240), so as to obtain an emitted light, wherein said pattern layer (220) comprises a series of protrusions (222) distributed so as to make the brightness of said emitted light uniform.

2. The illumination module (100) of claim 1, wherein said protrusions (222) are printed dots.

3. The illumination module (100) of claim 1, wherein said protrusions (222) are bubbles formed from said light guiding material (200).

4. The illumination module (100) of any of previous claims, wherein a density of said protrusions (222) increases by increasing their distance from said one or more lighting elements (110).

5. The illumination module (100) of any of previous claims, wherein a surface of each of said one or more lighting elements (110) is positioned in contact with the edges of said light guiding body (200), so as to have no gap between said one or more lighting elements (110) and said light guiding body (200) and to facilitate transmission of said emitted light.

6. The illumination module (100) of any of claims 1 to 4, wherein a gap is formed between each of said one or more lighting elements (110) and said light guiding material (210) and said gap is filled with a gap filling material having a refractive index suitable for enabling transmission of light within the gap.

7. The illumination module (100) of any of previous claims, wherein a width (W2) of said pattern layer (220) is smaller than a width (W1) of said light guiding material (210) and/or a length (L2) of said pattern layer (220) is smaller than a length (L1) of said light guiding material (210).

8. The illumination module (100) of any of previous claims, wherein each protrusion (222) has a circular shape with a diameter comprised within the range between 50 µm and 100 µm, preferably comprised within the range between 60 µm and 80 µm, even more preferably of 75 µm.

9. The illumination module (100) of any of previous claims, wherein at least one reflective portion (232) is applied in correspondence with said lighting element (110).

10. The illumination module (100) of any of previous claims, wherein said reflective layers (230) and/or said reflective portion (232) comprise a metal layer or a metalized layer.

11. The illumination module (100) of any of previous claims, wherein said substrate layer (240) is a Printed Circuit Board "PCB".

12. The illumination module (100) of any of clams 1 to 10 further comprising a Printed Circuit Board "PCB" (122) having a cutout portion, wherein said light guiding body (200) is placed within said cutout portion.

13. The illumination module (100) of claim 11 or 12, wherein said illumination module (100) comprises a plurality of lighting elements (110), for example a plurality of Light Emitting Diodes (LEDs), and said plurality of lighting elements (110) is formed on a single PCB (122).

14. The illumination module (100) of any one of previous claims, wherein said light guiding body (200) comprises an orientation element (150) for ensuring correct positioning of said light guiding body (200) with respect to said one or more lighting elements (110).

15. The illumination module (100) of any one of previous claims, further comprising an energy-harvesting antenna (120) for providing energy to said one or more lighting elements (110).

16. The illumination module (100) of claim 15, wherein said one or more lighting elements (110) are LEDs and said illumination module (100) further comprises a rectifying system (120) for rectifying the signal emitted by said energy-harvesting antenna (120) before transmitting it to said one or more LEDs.

17. A pre-laminated structure (300) for a smart card comprising:
- A pre-lam body (310) comprising a cutout portion;
- The illumination module (100) of any one of claims 1 to 16,
Wherein said illumination module (100) is positioned in said cutout portion.

18. The pre-laminated structure (300) of claim 17, further comprising a graphic layer (320) comprising a graphic element (321), wherein said graphic layer (320) is attached to said pre-lam body (310) in correspondence with said illumination module (100), so that said illumination module (100) illuminates said graphic element (321).

19. The pre-laminated structure (300) of claim 17 or 18, wherein one or more light reflective portion (140A, 140B, 140C) are formed on the sidewalls of said cutout portion in correspondence of said one or more lighting elements (110).

20. The pre-laminated structure (300) of any of claims 17 to 19, further comprising a reflective layer (330) configured to reflect the light emitted by said lighting elements (110) outside said light guiding material (210) and to re-direct it inside said light guiding material (210), or a blocking layer (340) configured to absorb the light emitted by said lighting elements (110) outside said light guiding material (210).

21. A smart card (1000) comprising:
- The pre-laminated structure (300) of any of claims 17 to 20;
- At least one opaque covering layer (400), or at least one partially clear covering layer (400) applied to said pre-laminated structure (300);
- At least one clear covering layer (410) applied to said at least one opaque covering layer (400), or to said at least one partially clear covering layer (400).

22. A smart card (1000) comprising:
- The pre-laminated structure (300) of claim 17, 19 or 20;
- A graphic layer (420) comprising a printed graphic element (421), wherein said graphic layer (420) is attached to said pre-laminated structure (300) in correspondence with said illumination module (100), so that said illumination module (100) illuminates said printed graphic element (421);
- At least one opaque covering layer (400) or at least one partially clear covering layer (400) applied to said pre-laminated structure (300);
- At least one clear covering layer (410) applied to said at least one opaque covering layer (400) or to said at least one partially clear covering layer (400).

## Patentansprüche

1. Beleuchtungsmodul (100) zum Beleuchten eines Abschnitts einer Smartcard, wobei das Beleuchtungsmodul (100) umfasst:
- eine Substrat-Schicht (240);
- ein oder mehrere Leuchtelement/e (100), das/die auf der Substrat-Schicht (240) positioniert und so ausgeführt ist/sind dass es/sie Licht parallel zu der Substrat-Schicht (240) emittiert/emittieren, beispielsweise eine oder mehrere LED; sowie
- einen Lichtleitkörper (200), der auf die Substrat-Schicht (42) aufgebracht ist und ein Lichtleitmaterial (210) umfasst;
**dadurch gekennzeichnet, dass:**
das Beleuchtungsmodul (100) des Weiteren eine reflektierende Schicht (230) umfasst, die so ausgeführt ist, dass sie das durch die Leuchtelemente (110) von dem Lichtleitmaterial (210) nach außen emittierte Licht reflektiert und es wieder in das Lichtleitmaterial (210) hineinleitet; und
der Lichtleitkörper des Weiteren eine Struktur-Schicht (220) umfasst, die auf das Lichtleitmaterial (210) aufgebracht und so ausgeführt ist, dass sie das Licht parallel zu der Substrat-Schicht (240) bricht und es in einer Richtung senkrecht zu der Substrat-Schicht (240) ablenkt, um ein emittiertes Licht zu gewinnen, wobei die Struktur-Schicht (220) eine Reihe von Vorsprüngen (222) umfasst, die so verteilt sind, dass die Helligkeit des emittierten Lichtes einheitlich ist.

2. Beleuchtungsmodul (100) nach Anspruch 1, wobei die Vorsprünge (222) aufgedruckte Punkte sind.

3. Beleuchtungsmodul (100) nach Anspruch 1, wobei die Vorsprünge (222) Blasen sind, die aus dem Lichtleitmaterial (200) bestehen.

4. Beleuchtungsmodul (100) nach einem der vorangehenden Ansprüche, wobei eine Dichte der Vorsprünge (222) mit zunehmendem Abstand von dem einen oder den mehreren Leuchtelement/en (110) zunimmt.

5. Beleuchtungsmodul (100) nach einem der vorangehenden Ansprüche, wobei eine Oberfläche jedes von dem einen oder den mehreren Leuchtelement/en (110) so in Kontakt mit den Rändern des Lichtleitkörpers (200) positioniert ist, dass kein Zwischenraum zwischen dem einen oder den mehreren Leuchtelement/en (110) und dem Lichtleitkörper (200) vorhanden ist und Durchlassen des emittierten Lichtes ermöglicht wird.

6. Beleuchtungsmodul (100) nach einem der Ansprüche 1 bis 4, wobei ein Zwischenraum zwischen jedem von dem einen oder den mehreren Leuchtelement/en (110) und dem Lichtleitmaterial (210) ausgebildet ist und der Zwischenraum mit einem Material zum Füllen des Zwischenraums gefüllt ist, das einen Brechungsindex hat, der geeignet ist, um Durchlassen von Licht im Inneren des Zwischenraums zu ermöglichen.

7. Beleuchtungsmodul (100) nach einem der vorangehenden Ansprüche, wobei eine Breite (W2) der Struktur-Schicht (200) kleiner ist als eine Breite (W1) des Lichtleitmaterials (210) und/oder eine Länge (L2) der Struktur-Schicht (220) kleiner ist als eine Länge (L1) des Lichtleitmaterials (210).

8. Beleuchtungsmodul (100) nach einem der vorangehenden Ansprüche, wobei jeder Vorsprung (222) eine Kreisform mit einem Durchmesser hat, der innerhalb des Bereiches zwischen 50 µm und 100 µm liegt, vorzugsweise innerhalb des Bereiches zwischen 60 µm und 80 µm liegt und besonders bevorzugt 75µm beträgt.

9. Beleuchtungsmodul (100) nach einem der vorangehenden Ansprüche, wobei wenigstens ein reflektierender Abschnitt (232) in Entsprechung zu dem Leuchtelement (110) aufgebracht ist.

10. Beleuchtungsmodul (100) nach einem der vorangehenden Ansprüche, wobei die reflektierenden Schichten (230) und/oder der reflektierende Abschnitt (232) eine Metallschicht oder eine metallisierte Schicht umfassen.

11. Beleuchtungsmodul (100) nach einem der vorangehenden Ansprüche, wobei die Substrat-Schicht (240) eine Leiterplatte ist.

12. Beleuchtungsmodul (100) nach einem der Ansprüche 1 bis 10, das des Weiteren eine Leiterplatte (122) mit einem ausgeschnittenen Abschnitt umfasst, wobei der Lichtleitkörper (200) im Inneren des ausgeschnittenen Abschnitts angeordnet wird.

13. Beleuchtungsmodul (100) nach Anspruch 11 oder 12, wobei das Beleuchtungsmodul (100) eine Vielzahl von Leuchtelementen (110), beispielsweise eine Vielzahl von Leuchtdioden (LED), umfasst und die Vielzahl von Leuchtelementen (110) auf einer einzelnen Leiterplatte (122) ausgebildet sind.

14. Beleuchtungsmodul (100) nach einem der vorangehenden Ansprüche, wobei der Lichtleitkörper (200) ein Ausrichtungselement (150) umfasst, das korrektes Positionieren des Lichtleitkörpers (200) in Bezug auf das eine oder die mehreren Leuchtelement/e (110) gewährleistet.

15. Beleuchtungsmodul (100) nach einem der vorangehenden Ansprüche, das des Weiteren eine Energy-Harvesting-Antenne (120) zum Bereitstellen von Energie für das eine oder die mehreren Leuchtelement/e (110) umfasst.

16. Beleuchtungsmodul (100) nach Anspruch 15, wobei das eine oder die mehreren Leuchtelement/e (110) LED ist/sind und das Beleuchtungsmodul (100) des Weiteren ein Entzerrungssystem (120) umfasst, mit dem das durch die Energy-Harvesting-Antenne (120) emittierte Signal entzerrt wird, bevor es zu der einen oder den mehreren LED gesendet wird.

17. Vorlaminierte Struktur (300) für eine Smartcard, die umfasst:
- einen Prelam-Körper (310), der einen ausgeschnittenen Abschnitt umfasst;
- das Beleuchtungsmodul (100) nach einem der Ansprüche 1 bis 16,
wobei das Beleuchtungsmodul (100) in dem ausgeschnittenen Abschnitt positioniert wird.

18. Vorlaminierte Struktur (300) nach Anspruch 17, die des Weiteren eine grafische Schicht (320) umfasst, die ein grafisches Element (321) umfasst, wobei die grafische Schicht (320) an dem Prelam-Körper (310) in Entsprechung zu dem Beleuchtungsmodul (100) so angebracht ist, dass das Beleuchtungsmodul (100) das grafische Element (321) beleuchtet.

19. Vorlaminierte Struktur (300) nach Anspruch 17 oder 18, wobei ein oder mehrere lichtreflektierender/lichtreflektierende Abschnitt/e (140A, 140B, 140C) an den Seitenwänden des ausgeschnittenen Abschnitts in Entsprechung zu dem einen oder den mehreren Leuchtelement/en (110) ausgebildet ist/sind.

20. Vorlaminierte Struktur (300) nach einem der Ansprüche 17 bis 19, die des Weiteren eine reflektierende Schicht (330), die so ausgeführt ist, dass sie das durch die Leuchtelemente (110) aus dem Lichtleitmaterial (210) nach außen emittierte Licht reflektiert und es wieder in das Lichtleitmaterial (210) hinein leitet, oder eine Sperrschicht (340) umfasst, die so ausgeführt ist, dass sie das durch die Leuchtelemente (110) aus dem Lichtleitmaterial (210) nach außen emittierte Licht absorbiert.

21. Smartcard (1000) die umfasst:
- die vorlaminierte Struktur (300) nach einem der Ansprüche 17 bis 20;
- wenigstens eine undurchsichtige Abdeckschicht (400) oder wenigstens eine teilweise durchsichtige Abdeckschicht (400), die auf die vorlaminierte Struktur (300) aufgebracht ist;
- wenigstens eine durchsichtige Abdeckschicht (14), die auf die wenigstens eine undurchsichtige Abdeckschicht (400) oder auf die wenigstens eine teilweise durchsichtige Abdeckschicht (400) aufgebracht ist.

22. Smartcard (1000) die umfasst:
- die vorlaminierte Struktur (300) nach Anspruch 17, 19 oder 20;
- eine grafische Schicht (420), die ein aufgedrucktes grafisches Element (421) umfasst, wobei die grafische Schicht (420) an der vorlaminierten Struktur (300) in Entsprechung zu dem Beleuchtungsmodul (100) so angebracht ist, dass das Beleuchtungsmodul (100) das aufgedruckte grafische Element (421) beleuchtet;
- wenigstens eine undurchsichtige Abdeckschicht (400) oder wenigstens eine teilweise durchsichtige Abdeckschicht (400), die auf die vorlaminierte Struktur (300) aufgebracht ist;
- wenigstens eine durchsichtige Abdeckschicht (14), die auf die wenigstens eine undurchsichtige Abdeckschicht (400) oder auf die wenigstens eine teilweise durchsichtige Abdeckschicht (400) aufgebracht ist.

## Revendications

1. Module d'éclairage (100) pour éclairer une partie d'une carte à puce, ledit module d'éclairage (100) comprenant :
- une couche de substrat (240) ;
- un ou plusieurs éléments lumineux (110) positionnés sur ladite couche de substrat (240) et configurés pour émettre de la lumière parallèlement à ladite couche de substrat (240), par exemple une ou plusieurs LED ; et
- un corps de guidage de lumière (200) appliqué sur ladite couche de substrat (240) et comprenant un matériau de guidage de lumière (210) ;
**caractérisé en ce que :**
ledit module d'éclairage (100) comprend en outre une couche réfléchissante (230) configurée pour réfléchir la lumière émise par lesdits éléments lumineux (110) vers l'extérieur dudit matériau de guidage de lumière (210) et la rediriger à l'intérieur dudit matériau de guidage de lumière (210) ; et
ledit corps de guidage de lumière comprend en outre une couche à motif (220) appliquée sur ledit matériau de guidage de lumière (210) et étant configurée pour réfracter ladite lumière parallèlement à ladite couche de substrat (240) et la dévier le long d'une direction perpendiculaire à ladite couche de substrat (240), de manière à obtenir une lumière émise, dans lequel ladite couche à motif (220) comprend une série de saillies (222) réparties de manière à rendre la luminosité de ladite lumière émise uniforme.

2. Module d'éclairage (100) de la revendication 1, dans lequel lesdites saillies (222) sont des points imprimés.

3. Module d'éclairage (100) de la revendication 1, dans lequel lesdites saillies (222) sont des bulles formées à partir dudit matériau de guidage de lumière (200).

4. Module d'éclairage (100) de l'une des revendications précédentes, dans lequel la densité desdites saillies (222) augmente en augmentant leur distance par rapport audit ou auxdits plusieurs éléments lumineux (110).

5. Module d'éclairage (100) de l'une des revendications précédentes, dans lequel une surface de chacun dudit ou desdits plusieurs éléments lumineux (110) est positionnée en contact avec les bords dudit corps de guidage de lumière (200), de manière à ne présenter aucun espace entre ledit ou lesdits plusieurs éléments lumineux (110) et ledit corps de guidage de lumière (200) et à faciliter la transmission de ladite lumière émise.

6. Module d'éclairage (100) de l'une des revendications 1 à 4, dans lequel un espace est formé entre chacun dudit ou desdits plusieurs éléments lumineux (110) et ledit matériau de guidage de lumière (210) et ledit espace est rempli d'un matériau de remplissage d'espace ayant un indice de réfraction approprié pour permettre la transmission de la lumière à travers l'espace.

7. Module d'éclairage (100) de l'une des revendications précédentes, dans lequel une largeur (W2) de ladite couche à motif (220) est inférieure à une largeur (W1) dudit matériau de guidage de lumière (210) et/ou une longueur (L2) de ladite couche à motif (220) est inférieure à une longueur (L1) dudit matériau de guidage de lumière (210).

8. Module d'éclairage (100) de l'une des revendications précédentes, dans lequel chaque saillie (222) présente une forme circulaire avec un diamètre compris dans la plage allant de 50 µm à 100 µm, de préférence compris dans la plage allant de 60 µm à 80 µm, et plus préférablement égal à 75 µm.

9. Module d'éclairage (100) de l'une des revendications précédentes, dans lequel au moins une partie réfléchissante (232) est appliquée en correspondance avec ledit élément lumineux (110).

10. Module d'éclairage (100) de l'une des revendications précédentes, dans lequel lesdites couches réfléchissantes (230) et/ou ladite partie réfléchissante (232) comprennent une couche métallique ou une couche métallisée.

11. Module d'éclairage (100) de l'une des revendications précédentes, dans lequel ladite couche de substrat (240) est une carte de circuit imprimé « PCB ».

12. Module d'éclairage (100) de l'une des revendications 1 à 10, comprenant en outre une carte de circuit imprimé « PCB » (122) ayant une partie découpée, dans lequel ledit corps de guidage de lumière (200) est placé à l'intérieur de ladite partie découpée.

13. Module d'éclairage (100) de la revendication 11 ou 12, dans lequel ledit module d'éclairage (100) comprend une pluralité d'éléments lumineux (110), par exemple une pluralité de diodes électroluminescentes (LED) et ladite pluralité d'éléments lumineux (110) sont formée sur une seule PCB (122).

14. Module d'éclairage (100) de l'une quelconque des revendications précédentes, dans lequel ledit corps de guidage de lumière (200) comprend un élément d'orientation (150) pour assurer le positionnement correct dudit corps de guidage de lumière (200) par rapport audit ou auxdits plusieurs éléments lumineux (110).

15. Module d'éclairage (100) de l'une quelconque des revendications précédentes, comprenant en outre une antenne de récupération d'énergie (120) pour fournir de l'énergie audit ou auxdits plusieurs éléments lumineux (110).

16. Module d'éclairage (100) de la revendication 15, dans lequel ledit ou lesdits plusieurs éléments lumineux (110) sont des LED et ledit module d'éclairage (100) comprend en outre un système de redressement (120) pour redresser le signal émis par ladite antenne de récupération d'énergie (120) avant de le transmettre à ladite ou auxdites plusieurs LEDs.

17. Structure pré-laminée (300) pour une carte à puce comprenant :
- un corps pré-laminé (310) comprenant une partie découpée ;
- le module d'éclairage (100) de l'une quelconque des revendications 1 à 16,
dans laquelle ledit module d'éclairage (100) est positionné dans ladite partie découpée.

18. Structure pré-laminée (300) de la revendication 17, comprenant en outre une couche graphique (320) comprenant un élément graphique (321), dans laquelle ladite couche graphique (320) est fixée audit corps pré-laminé (310) en correspondance avec ledit module d'éclairage (100), de sorte que ledit module d'éclairage (100) éclaire ledit élément graphique (321).

19. Structure pré-laminée (300) de la revendication 17 ou 18, dans laquelle une ou plusieurs parties réfléchissantes de lumière (140A, 140B, 140C) sont formées sur les parois latérales de ladite partie découpée en correspondance avec ledit ou lesdits plusieurs éléments lumineux (110).

20. Structure pré-laminée (300) de l'une des revendications 17 à 19, comprenant en outre une couche réfléchissante (330) configurée pour réfléchir la lumière émise par lesdits éléments lumineux (110) à l'extérieur dudit matériau de guidage de lumière (210) et pour la rediriger à l'intérieur dudit matériau de guidage de lumière (210), ou une couche de blocage (340) configurée pour absorber la lumière émise par lesdits éléments lumineux (110) à l'extérieur dudit matériau de guidage de lumière (210).

21. Carte à puce (1000) comprenant :
- la structure pré-laminée (800) de l'une des revendications 17 à 20 ;
- au moins une couche de couverture opaque (400), ou au moins une couche de couverture partiellement transparente (400) appliquée sur ladite structure pré-laminée (300) ;
- au moins une couche de couverture transparente (410) appliquée sur ladite au moins une couche de couverture opaque (400), ou sur ladite au moins une couche de couverture partiellement transparente (400).

22. Carte à puce (1000) comprenant :
- la structure pré-laminée (800) de la revendication 17, 19 ou 20 ;
- une couche graphique (420) comprenant un élément graphique imprimé (421), dans laquelle ladite couche graphique (420) est fixée à ladite structure pré-laminée (300) en correspondance avec ledit module d'éclairage (100), de sorte que ledit module d'éclairage (100) illumine ledit élément graphique imprimé (421) ;
- au moins une couche de couverture opaque (400) ou au moins une couche de couverture partiellement transparente (400) appliquée sur ladite structure pré-laminée (300) ;
- au moins une couche de couverture transparente (410) appliquée sur ladite au moins une couche de couverture opaque (400) ou sur ladite au moins une couche de couverture partiellement transparente (400).
